# EUROPÄISCHE PATENTANMELDUNG

(11) **EP 1 227 310 A2**
(43) Veröffentlichungstag der Anmeldung: **31.07.2002**
(21) Anmeldenummer: 02000511.2
(22) Anmeldetag: 09.01.2002
(51) Int. Cl.: G01M 13/04

(54) **Vorrichtung zum Überwachen von Wälzlagern**

(30) Priorität: 27.01.2001 DE 20101447 U
(71) Anmelder: LINDAUER DORNIER GESELLSCHAFT M.B.H, 88129 Lindau (DE)
(72) Erfinder: Urbanzyk, Kai, 88131 Lindau (DE); Rutz, Andreas, Dr., 88131 Lindau (DE)

(57) **Zusammenfassung**

Es ist, ausgehend von dem bekannten Stand der Technik, Aufgabe der Erfindung, Maßnahmen zu treffen, die es ermöglichen, die Funktionsfähigkeit der die Spannkluppen auf Endlosführungsschienen führenden Wälzlager im laufenden Betrieb einer Spannmaschine zu überwachen.

Erfindungsgemäß wird die Aufgabe dadurch gelöst, dass im Kontaktbereich jeder Endlosführungsschiene (1) einer Spannmaschine und der Umfangsfläche des Lager-Außenringes (2a) der die Spannkluppen führenden Wälzlager (2) Mittel zum Erfassen einer physikalischen Größe vorhanden sind.

## Beschreibung

Die Erfindung betrifft eine Vorrichtung zum Überwachen von Wälzlagern, insbesondere des Außenringes von Wälzlagern an Spannkluppen einer auf Endlosführungschienen umlaufenden Spannkluppenkette einer Spannmaschine.

Allgemein bekannt sind Spannmaschinen, wie z.B. Maschinen zum biaxialen Recken von thermoplastischen Kunststofffolien, die eine erste und eine zweite Endlosführungsschiene besitzen.
Die Endlosführungsschienen z.B. besitzen zueinander parallel, divergierend oder konvergierend verlaufende Führungsschienenabschnitte.
Auf jeder Endlosführungsschiene sind mit Rollenlagern ausgerüstete Spannkluppen zu einer Spannkluppenkette verbunden. Jede Spannkluppenkette steht mit einem Antrieb derart in Verbindung, dass die Spannkluppenketten zueinander einen synchronen Bewegungsverlauf auf den Endlosführungsschienen ausführen.
Bei schnelllaufenden, rollengelagerten Kluppenketten kann es, vorallem nach längerer Laufzeit, zu Ermüdungserscheinungen der Wälzlager kommen.
Als Folge der Ermüdungserscheinung kann u.a. der Bruch oder Verlust des Außenringes eines oder mehrerer Wälzlager eintreten.
Bruchstücke eines gebrochenen Wälzlager-Außenringes können dann im Betrieb der Spannmaschine zu Schäden führen, wie z.B. Verklemmen der Kluppenkette an der Endlosführungsschiene, die sich als kostenaufwendige Instantsetzungsmaßnahmen und als Produktionsausfall wiederspiegeln.

Aufgabe der Erfindung ist es daher, Maßnahmen zu treffen, mit denen die Funktionsfähigkeit der die Spannkluppen auf den Endlosführungsschienen führenden Wälzlager im laufenden Betrieb der Spannmaschine überwacht wird.

Die Aufgabe wird erfindungsgemäß durch die Merkmale des Patentanspruchs 1 gelöst.
Danach ist erfindungswesentlich, dass im Kontaktbereich der Endlosführungsschiene und der Umfangsfläche des Lager-Außenrings eines Wälzlagers wenigstens ein das Passieren der Lager-Außenringe aller rollengelagerten Spannkluppen einer Spannkluppenkette erfassendes Mittel einer physikalischen Größe vorhanden ist, welches Mittel das Fehlen eines Lager-Außenringes detektiert. Die physikalische Größe kann gem. der Erfindung der gestaute Druck einer von einem pneumatischen Mittel abgehenden Luftströmung, das beeinträchtigte Magnetfeld eines elektromagnetischen Mittels oder der unterbrochene Lichtstrahl eines optoelektrischen Mittels sein.

In bevorzugter Weise dient als Mittel ein in die jeweilige Endlosführungsschiene integrierter pneumatisch beaufschlagbarer hülsenartiger Körper, der zwischen sich und der Endlosführungsschiene eine ringförmige Auslassöffnung mit einem zentrisch zur Auslassöffnung angeordneten Eingang eines Druck-Messkanals ausbildet, dessen Ausgang mit einer an sich bekannten Druckmesseinrichtung wirkverbunden ist. Der aus dem ringförmigen Luftaustrittskanal ausströmende Luftstrom erzeugt bei einem dem Luftstrahl entgegenwirkenden Widerstand in dem Druckluftkanal einen Staudruck (Ist-Signaldruck).
Dieser Ist-Signaldruck wird einer Druckmesseinrichtung zugeleitet.
Der an der Druckmesseinrichtung anliegende Ist-Signaldruck wird in ein elektrisches Ist-Signal umgewandelt und in Beziehung zu einem elektrischen Soll-Signal gebracht. Weichen Ist-Drucksignal und Soll-Drucksignal über einen zulässigen Toleranzwert hinaus ab, wird dies dem Bediener der Maschine in geeigneter Weise signalisiert.

Um zu verhindern, dass Schmutzpartikel den Messkanal zusetzen und damit das Messergebnis verfälschen, also ein inkorrektes Ist-Drucksignal angegeben wird, wird der Messkanal in regelmäßigen Zeitabständen gereinigt.
Der Reinigungsprozess wird durch Freiblasen des Messkanals ausgelöst, und zwar erfindungsgemäß dadurch, dass automatisch ein zwischen dem Ausgang des Messkanals und der Druckmesseinrichtung eingebundenes steuerbares Wegeventil Druckluft entgegengesetzt der Strömungsrichtung der den Messdruck auslösenden Luftströmung in den Messkanal leitet.

Mit der wenigstens einen erfindungsgemäßen Überwachungsvorrichtung ist der Vorteil einer umgehenden Einflussnahme auf den Prozeßverlauf der Spannmaschine gegeben; Schäden größeren Ausmaßes können vermieden werden.

Die Erfindung wird nachfolgend an einem Ausführungsbeispiel näher beschrieben.

In den Zeichnungen zeigen:
- Figur 1: die erfindungsgemäß ausgebildete Vorrichtung bei Integration in die Endlosführungsschiene einer Spannmaschine,
- Figur 2-4: die abstrahierte Darstellung der Positionen eines Rollenlagers mit Außenring an einer Endlosführungsschiene vor, während und nach dem Passieren der erfindungsgemäßen Vorrichtung,
- Figur 2a-4a: den Verlauf des Messdruckes gemäß der Figuren 2 bis 4,
- Figur 5 - 7: die abstrahierte Darstellung der Positionen eines Lagers ohne Lageraußenring an einer Endlosführungsschiene vor, während und nach dem Passieren der erfindungsgemäßen Vorrichtung,
- Figur 5a-7a: den Verlauf des Messdruckes gemäß der Figuren 5 bis 7 und
- Figur 8: eine im Vergleich zu Figur 1 anders geartete Überwachungsvorrichtung.

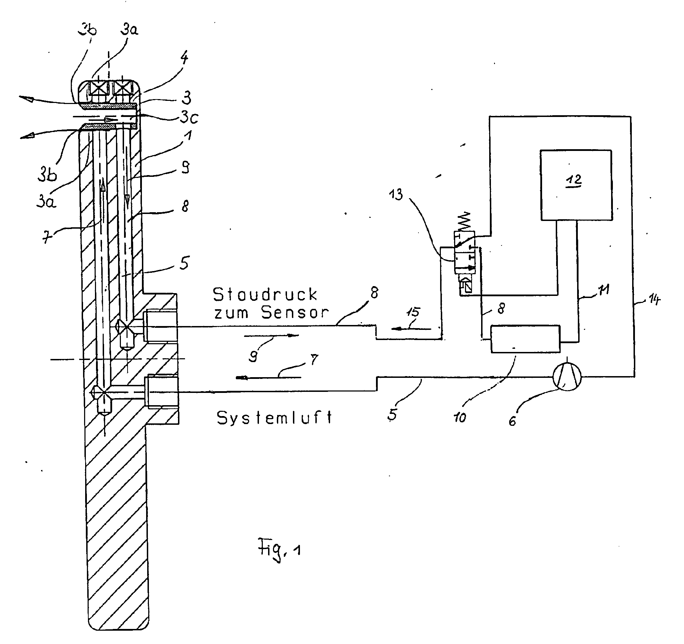

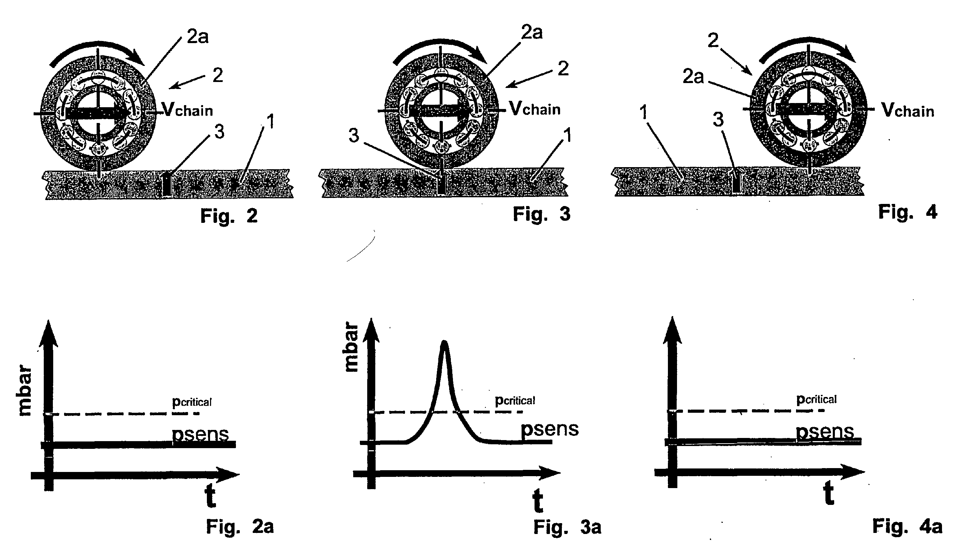

Gemäß Figur 1 ist die erfindungsgemäße Vorrichtung in einer, wie in der Schnittdarstellung gezeigt, Endlosführungsschiene 1 integriert.
In einem Bereich der Endlosführungsschiene 1, an dem die als Laufrollen einer nicht dargestellten Spannkluppe ausgebildeten Wälzlager 2 mit Lageraußenring 2a in Berührungskontakt stehen oder kommen, s.a. Figur 2 bis 4, ist ein hülsenartiger Körper 3 integriert, der zusammen mit der Endlosführungsschiene 1 eine ringförmige Austrittsöffnung 3b ausbildet, aus welcher Öffnung 3b permanent ein der Kontaktfläche des Lageraußenringes 2a entgegengerichteter Luftstrom austritt.

Die Austrittsöffhung 3b des Strömungskanals 3a ist von dem Umfang 4a einer in die Endlosführungsschiene 1 eingebrachten Bohrung 4 und von einem in dieser Bohrung aufgenommenen hülsenartig ausgebildeten Körper 3 gebildet.
Die so gebildete Bohrung-Hülse-Verbindung lässt die ringförmige Austrittsöffnung 3b zwischen der Endlosführungsschiene 1 und dem Körper 3 entstehen.
Der Strömungskanal 3a steht mit einer Druckluftleitung 5 in Verbindung, die ihrerseits an eine pneumatische Druckquelle 6 angeschlossen ist.

Gemäß den Richtungspfeilen 7 wird von der Druckluftquelle 6 über die Druckluftleitung 5 Druckluft zu dem Strömgunskanal 3a gefördert, die an dem ringförmigen Ausgang 3b des Störmungskanals 3a austritt.
Ein den Austritt der Druckluft beeinträchtigender Widerstand, wie der Außenring 2a des Wälzlagers 2, führt zum Aufbau eines Staudruckes im Staudruckkanal 3c des Körpers 3, der über eine Messleitung 8 gemäß Richtungspfeil 9 von einem an die Messleitung 8 angeschlossenen Staudrucksensor 10 erfasst wird. Dieser Staudruck wird in bekannter Weise in ein elektrisches Signal umgewandelt, über eine Signalleitung 11 zu der Maschinensteuerung 12 geführt und damit in geeigneter Weise wahrnehmbar gemacht.

In weiterer Ausgestaltung der Erfindung ist in die zu dem Staudrucksensor 10 führenden Messleitung 8 ein Wegeventil 13 eingebunden, das über eine von der Druckquelle 6 ausgehende Druckleitung 14 diese mit der Messleitung 8 verbindet.

Damit wird in festgelegten Zeitintervallen ein wesentlicher Teil des Messstranges 3c, 8 entgegengesetzt zum Verlauf des Staudruckes, nämlich gemäß Richtungspfeil 15, mit Druckmedium beaufschlagt, und zwar zum Zwecke der Beseitigung eventuell vorhandener Verunreinigungen in dem Messstrang 3c, 8.

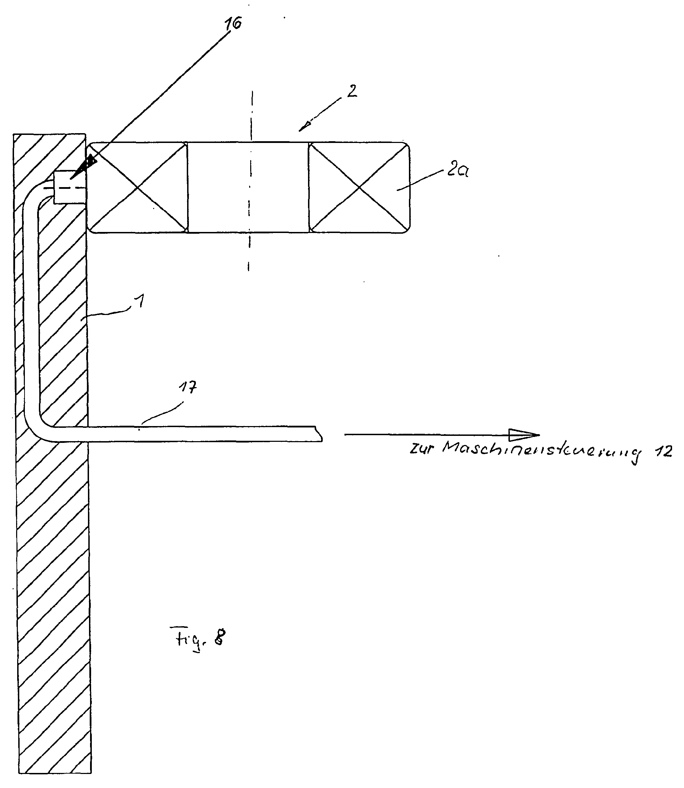

Figur 8 zeigt ein weiteres Ausführungsbeispiel zum Detektieren eines fehlenden Lageraußenringes 2a einer rollengelagerten Spannkluppe.
Hier ist in der Endlosführungsschiene 1, und zwar im Kontaktbereich der Endlosführungsschiene und der Umfangsfläche des Lageraußenrings 2a des Wälzlagers 2, ein an sich bekannter Wirbelstromsensor 16 integriert. Der Wirbelstromsensor 16 ist über das Kabel 17 signalübertragend mit der Maschinensteuerung 12 verbunden.
Ein den Kontaktbereich der Endlosführungsschiene 1 intaktes Wälzlager 2 führt zum Generieren von einem elektrischen Signal, das in der Maschinensteuerung 12 als intaktes Wälzlager interpretiert wird.
Im Gegensatz dazu generiert ein defektes Wälzlager 2, also bei fehlendem Wälzlageraußenring 2a, kein elektrisches Signal, was zum Auslösen einer geeigneten Störmeldung durch die Maschinensteuerung 12 führt.

### Die Wirkungsweise der erfindungsgemäß ausgebildeten Vorrichtung ist wie folgt:

Die Figur 2 bis 4 und 2a bis 4a verdeutlichen die normalen Betriebsbedingungen einer mit der Endlosführungsschiene 1 in Kontakt stehenden rollengeführten Spannkluppenkette.
Ein intaktes Wälzlager 2 mit Lageraußenring 2a passiert den symbolisch durch einen Pfeil dargestellten Ausgang des Strömungskanals 3a. In dem Diagramm gemäß Figur 2a ist der Versorgungsluftdruck in mbar über die Zeit t konstant.
Der Druck psens entspricht den im Drucksensor 10 gem. Figur 1 herrschenden normalen Umgebungsdruck. Oberhalb des Druckes psens ist ein über die Zeit konstanter kritischer Druckwert pcritical festgelegt. Wird der Druckwert pcritical erreicht oder überschritten, wie in Figur 3a dargestellt, ist dies ein Indiz dafür, dass während des Betriebes der Spannkluppen am Drucksensor 10 ein Staudruck erfasst ist. Ursache eines sich einstellenden Staudruckes ist, dass die Lageraußenringe 2a der Kluppen-Wälzlager 2 in vorbestimmten Zeitfolgen den Ausgang 3b des Strömungskanals 3a kurzzeitig abdecken, wodurch ein Druckanstieg in der Messleitung 8 erfolgt.

Der den vorgegebenen Druck pcritical übersteigende Druck generiert ein binäres Signal, dass das Passieren der intakten Wälzlager 2 der betreffenden Spannkluppe einer auf einer Endlosführungsschiene geführten Spannkluppenkette eindeutig identifiziert.

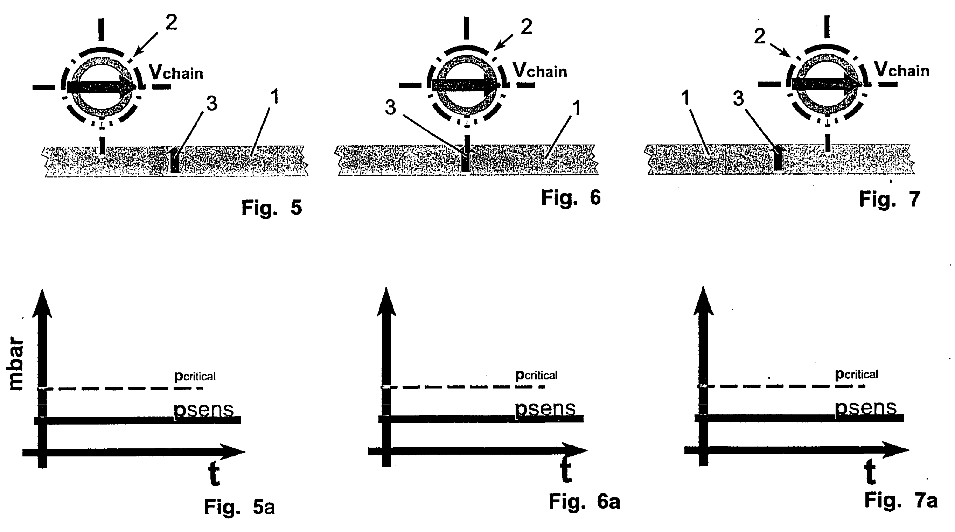

In den Figuren 5 bis 7 und 5a bis 7a ist dargestellt, dass der kritische Druck pcritical bei Passieren der Austrittsöffnung 3b des Strömungskanals 3a durch ein Kluppenwälzlager 2 ohne Lageraußenring 2a nicht erreicht bzw. nicht überschritten wird. Das betreffende Kluppenwälzlager lässt also keinen Messdruck im Drucksensor 10 entstehen, was ein Indiz für das Fehlen eines Lageraußenringes 2a ist.

### Zeichnungs-Legende

- 1: Endlosführungsschiene
- 2: Wälzlager
- 2a: Lageraußenring
- 3: Körper
- 3a: Strömungskanal
- 3b: Austrittsöffnung
- 3c: Staudruckkanal
- 4: Bohrung
- 4a: Umfang
- 5: Druckluftleitung
- 6: Druckquelle
- 7: Richtungspfeil
- 8: Messleitung
- 9: Richtungspfeil
- 10: Staudrucksensor
- 11: Signalleitung
- 12: Maschinensteuerung
- 13: Wegeventil
- 14: Druckluftleitung
- 15: Richtungspfeil
- 16: Wirbelstromsensor
- 17: Kabel

## Patentansprüche

1. Vorrichtung zum Überwachen von Wälzlagern, insbesondere des Außenringes von Wälzlagern an Spannkluppen einer auf einer Endlosführungsschiene umlaufenden Spannkluppenkette einer Spannmaschine, **dadurch gekennzeichnet, dass** im Kontaktbereich der Endlosführungsschiene (1) und der Umfangsfläche des Lager-Außenrings (2a) Mittel zum Erfassen einer physikalischen Größe vorhanden sind.

2. Vorrichtung nach Anspruch 1, **dadurch gekennzeichnet, dass** die physikalische Größe der gestaute Druck einer von einem pneumatischen Mittel abgehenden Luftströmung ist.

3. Vorrichtung nach Anspruch 1, **dadurch gekennzeichnet, dass** die physikalische Größe das beeinträchtigte Magnetfeld eines elektromagnetischen Mittels ist.

4. Vorrichtung nach Anspruch 1, **dadurch gekennzeichnet, dass** die physikalische Größe der unterbrochene Lichtstrahl eines optoelektrischen Mittels ist.

5. Vorrichtung nach Anspruch 2, **dadurch gekennzeichnet, dass** das Mittel aus wenigstens einem in die Endlosführungsschiene (1) integrierten hülsenartigen Körper (3) besteht, welcher Körper (3) zwischen seinem Außenumfang und einer den Körper in der Endlosführungsschiene (1) aufnehmenden Bohrung (4) einen mit einer Druckluftleitung (5) verbundenen, ringförmigen Strömungskanal (3a) ausbildet, und welcher Körper (3) ferner einen mit einer Messleitung (8) verbundenen, koaxial zum Strömungskanal (3a) verlaufenden Staudruckkanal (3c) besitzt und welches Mittel mit wenigstens einer pneumatisch wirkenden Druckquelle (6) verbunden ist.

6. Vorrichtung nach Anspruch 5, **dadurch gekennzeichnet, dass** die Messleitung (8) unter Einbindung eines Steuerventils (13) an einem Drucksensor (10) angeschlossen ist.

7. Vorrichtung nach Anspruch 5, **dadurch gekennzeichnet, dass** die Messleitung (8) unter Schaltung des Steuerventils (13) mit der pneumatischen Druckquelle (6) verbindbar ist.

8. Vorrichtung nach Anspruch 5, **dadurch gekennzeichnet, dass** die Druckluftleitung (5) an die pneumatische Druckquelle (6) angeschlossen ist.

9. Vorrichtung nach Anspruch 6, **dadurch gekennzeichnet, dass** der Staudrucksensor (10) mit einer die Spannmaschine steuernden Einrichtung (12) signalübertragend verbunden ist.

10. Vorrichtung nach Anspruch 3, **dadurch gekennzeichnet, dass** das elektromagnetische Mittel wenigstens ein in die Endlosführungsschiene integrierter Wirbelstromsensor (15) ist.

11. Vorrichtung nach Anspruch 4, **dadurch gekennzeichnet, dass** das optoelektrische Mittel wenigstens ein in die Endlosführungsschiene integrierter optoelektrischer Sensor ist.
